# EUROPÄISCHE PATENTSCHRIFT

(11) **EP 2 143 623 B1**
(45) Veröffentlichungstag und Bekanntmachung des Hinweises auf die Patenterteilung: **10.08.2016**
(21) Anmeldenummer: 08012649.3
(22) Anmeldetag: 12.07.2008
(51) Int. Cl.: B62D 33/04, B62D 27/02

(54) **Verbindung, insbesondere für Teile von Fahrzeugaufbauten**
Connector, in particular for parts of automobile bodies
Liaison, en particulier pour pièces de constructions de véhicule

(43) Veröffentlichungstag der Anmeldung: 13.01.2010
(73) Patentinhaber: AluTeam Fahrzeugtechnik GmbH, 33649 Bielefeld (DE)
(72) Erfinder: Schneider, Thomas, 33647 Bielefeld (DE)
(74) Vertreter: Schober, Mirko

(56) Entgegenhaltungen:
- EP-A- 1 477 362
- DE-U1- 29 504 286
- GB-A- 2 180 802
- GB-A- 2 375 510
- US-A- 5 466 035

## Beschreibung

Die Erfindung betrifft eine Verbindung, insbesondere für Teile von Fahrzeugaufbauten nach dem Oberbegriff des Anspruchs 1.

Eine Verbindung für Teile von Fahrzeug autbauten ist in GB2180802 A offenbart.

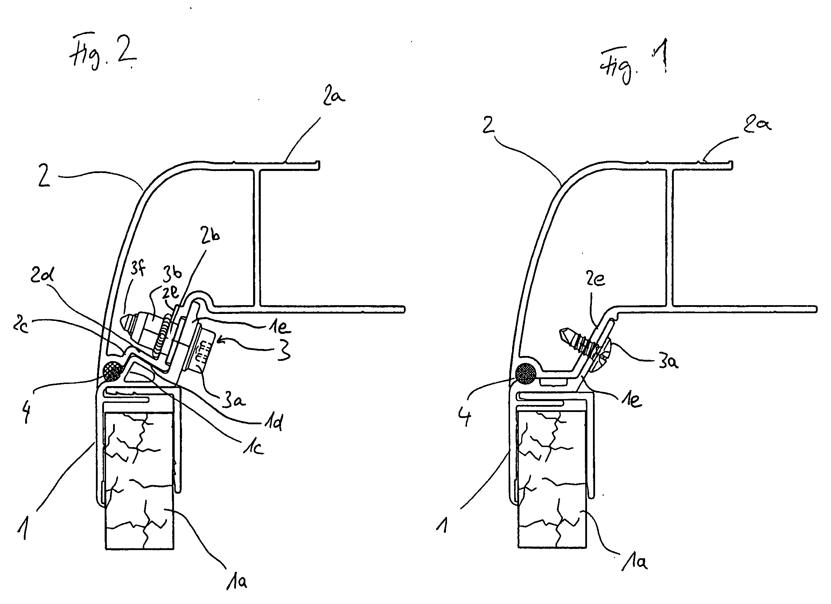

Entsprechende Verbindungen weisen - wie in Figur 1 darge-stellt - einen ersten Abschnitt (1), der gleichzeitig Aufnahme für eine Wand 1a ist, und einen zweiten Abschnitt (2) auf, die über eine durch entsprechende Abschnitte 1e, 2e geführte Schraube 3a miteinander verbunden und mittels einer Dichtung 4 abgedichtet werden. Nach dem Stand der Technik wird bei der Montage eine selbstschneidende Bohrschraube 3a eingesetzt. Der dem Schraubenkopf zugewandte Abschnitt 1e des ersten Verbindungsabschnitts 1 ist dabei vorgelocht, der andere Abschnitt 2e wird beim Einschrauben der Schraube 3a durch die selbstschneidende Schraube 3a durchbohrt und mit einem entsprechenden Anzugsmoment eingedreht.

Bei unsachgemäßer Handhabung beim Einschrauben der Schraube kann es vorkommen, daß die Schrauben 3a schief angesetzt und damit nicht senkrecht eingedreht werden. Wenn dann auch das erforderliche Anzugsmoment nicht eingehalten wird, kann es aufgrund von Vibrationen vorkommen, daß sich die Schrauben 3a wieder lösen und die Verbindung undicht wird und sich im Extremfall komplett löst.

Der Erfindung liegt deshalb die Aufgabe zugrunde, eine Verbindung der eingangs genannten Art anzugeben, die die erwähnten Nachteile nicht aufweist.

Gelöst wird die Aufgabe mit den Merkmalen des Anspruchs 1, vorteilhafte Ausführungsformen finden sich in den Unteransprüchen.

Erfindungsgemäß ist eine Schraube vorgesehen, die in eine bevorzugt als Einnietmutter ausgebildete Aufnahme eingedreht wird. Die Aufnahme dient als Führung, so daß sich die Schraube nur eindrehen läßt, wenn Sie ordnungsgemäß, d.h. annähernd senkrecht angesetzt wird. Die Schraube ist hierzu bevorzugt eine Flanschkopfschraube mit einer Zentrierspitze, die das Eindrehen zusätzlich erleichtert. Bevorzugt ist an Schraube und/oder Aufnahme eine bevorzugt in Form einer Mikroverkapselung oder eines Flüssigklebers ausgebildete Schraubensicherung vorgesehen, die bewirkt, daß die Schraube zwar angezogen werden, sich aber danach nicht mehr lösen kann.

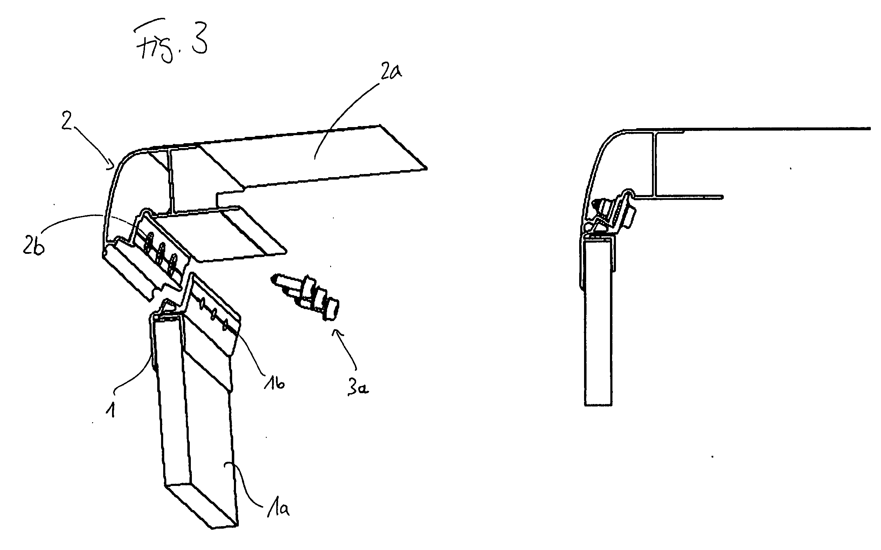

Die Erfindung wird nachfolgend anhand der Zeichnungen in den Figuren 2 und 3 schematisch näher erläutert.
- Figur 2 -: zeigt eine Schnittansicht durch eine erfindungsgemäße Verbindung,
- Figur 3 -: zeigt eine perspektivische Ansicht der Verbindung in Explosionsdarstellung.

Die in Figuren 2 und 3 (auf die im Folgenden gleichermaßen Bezug genommen wird) gezeigte Verbindung weist einen ersten Verbindungsabschnitt 1, der etwa zur Aufnahme einer Seitenwand 1a eines Fahrzeugaufbaus dient und einen zweiten Verbindungsabschnitt 2 auf, der beispielsweise Teil der Decke eines Fahrzeugaufbaus ist. Die Verbindungsabschnitte 1, 2 liegen im verbundenen Zustand mit den jeweiligen Anlageabschnitten 1e, 2e; 1d, 2d bzw. 1c, 2c aneinander und sorgen so für eine formschlüssige Verbindung. Die Abschnitte 1c, 1d bzw. 2c, 2d sind jeweils zueinander gewinkelt, was zum einen die zumeist als (ggf. einige Meter) lange Profile vorgesehenen Verbindungsabschnitte 1, 2 zusätzlich versteift (so daß auch bei größeren Längen keine Verstärkungswinkel erforderlich sind) und zudem eine größere Anlagefläche für die Dichtung 4 und damit eine bessere Dichtwirkung zur Verfügung stellt. Bevorzugt sind der erste und der zweite Verbindungsabschnitt 1, 2 Teile eines Fahrzeugaufbaus, so daß die erfindungsgemäße Verbindung Teile des Fahrzeugaufbaus, z.B. das Dach, die Stirnwand, das Portal oder die Seitenwand miteinander verbindet.

Erfindungsgemäß ist die Schraube durch die beiden parallelen Anlageabschnitte 1e, 2e geführt, welche hierzu entsprechende Bohrungen 1b, 2b vorsehen. In die Bohrung 2b ist eine Aufnahme, im gezeigten Beispiel eine Einnietmutter 3b eingesetzt, welche die durch die Bohrung 1b eingeführte Schraube 3a aufnimmt. Die Schraube 3a ist bevorzugt eine Flanschkopfschraube mit einer Zentrierspitze 3f. Der Einsatz einer Verbindung mit einer Flanschkopfschraube 3a und einer als Führung wirkenden Einnietmutter 3b führt dazu, daß die in einem Winkel zum Abschnitt 2e, 3e angesetzte Schraube 3a sich nicht schief eindrehen läßt, sondern nur senkrecht zu den Abschnitten 2e, 3e eingedreht werden kann. Das Festziehen mit einem definierten Anzugmoment wird so ermöglicht.

Erfindungsgemäß ist die Schraubverbindung zusätzlich gesichert, so daß die Schraube 3a zwar eingedreht, aber anschließend durch Vibrationen nicht mehr gelöst werden kann. Die Sicherung kann dabei auf verschiedenste Art und Weise durchgeführt werden, vorzugsweise durch eine auf der Schraube und/ oder der Einnietmutter vorgesehene Mikroverkapselung.

Bevorzugt sind an den Verbindungsabschnitten 1 und 2 eine Mehrzahl über die jeweilige Längserstreckung verteilte Bohrungen 1b, 2b zum Durchführen der Schraube 3a bzw. zum Einsetzen der Aufnahme 3b vorgesehen, welche beim Zusammenführen der Verbindungsabschnitte zur Überdeckung gebracht werden.

Durch die erfindungsgemäße Verbindung werden ein sicheres Einschrauben mit gleichbleibendem Anzugsmoment sowie ein sicherer Halt der beiden zu verbindenden Abschnitte ermöglicht. So kann neben einer Montageerleichterung auch eine wesentlich bessere Zentrierung von Wänden und Dächern eines Fahrzeugaufbaus erreicht werden. Durch die zusätzliche Zentrierspitze 3f kann die Verbindung zudem wesentlich schneller hergestellt werden. Zudem wird durch die erfindungsgemäße Verbindung erreicht, daß die zu verbindenden Bauteile in einer definierten Position zueinander montiert werden können, was zu einer Präzisierung des Spaltmaßes beiträgt.

## Patentansprüche

1. Verbindung, insbesondere für Teile von Fahrzeugaufbauten, mit einem ersten Verbindungsabschnitt (1) und einem zweiten Verbindungsabschnitt (2) sowie einer Verbindungseinrichtung (3) zur Verbindung des ersten Verbindungsabschnitts (1) mit dem zweiten Verbindungsabschnitt (2), wobei die Verbindungseinrichtung eine durch den ersten und den zweiten Verbindungsabschnitt geführte Schraube (3a) aufweist, wobei ein Verbindungsabschnitt (2) eine Aufnahme (3b) für die Schraube (3a) aufweist, wobei die Verbindungsabschnitte (1, 2) jeweils Teile des Dachs, der Stirnwand, des Portals oder der Seitenwand eines Fahrzeugaufbaus oder mit einem von diesen Teilen verbunden sind, so dass sie eine Verbindung zwischen zweien dieser Teile herstellen können, wobei die Aufnahme (3b) für die Schraube (3a) eine als Führung wirkende Einnietmutter ist,
**dadurch gekennzeichnet,**
**dass** die Schraube (3a) eine Zentrierspitze (3f) aufweist.

2. Verbindung nach Anspruch 1,
**dadurch gekennzeichnet,**
**dass** die beiden Verbindungsabschnitte (1, 2) für eine formschlüssige Anlage ausgelegt sind.

3. Verbindung nach einem der vorherigen Ansprüche,
**dadurch gekennzeichnet,**
**dass** es sich bei der Schraube (3a) um eine Flanschkopfschraube handelt.

4. Verbindung nach einem der vorherigen Ansprüche,
**dadurch gekennzeichnet,**
**dass** in dem einen Verbindungsabschnitt (2) eine Mehrzahl Einnietmuttern (3b) vorgesehen ist, die so angeordnet sind, dass sie sich mit im anderen Verbindungsabschnitt (1) vorgesehenen Bohrungen (1b) zum Durchführen der Schrauben (3a) beim Zusammenfügen der Verbindungsabschnitte überdecken.

5. Verbindung nach einem oder vorherigen Ansprüche,
**dadurch gekennzeichnet,**
**dass** die Aufnahme (3b) und/oder die Schraube (3a) eine Schraubensicherung aufweist.

6. Verbindung nach Anspruch 5,
**dadurch gekennzeichnet,**
**dass** als Schraubensicherung eine Mikroverkapselung oder ein Flüssigkleber vorgesehen ist.

## Claims

1. Connector, in particular for parts of vehicle bodies, having a first connecting portion (1) and a second connecting portion (2) as well as a connection means (3) to connect the first connecting portion (1) to the second connecting portion (2), wherein the connection means has a screw (3a) guided through the first and the second connecting portion, wherein one connecting portion (2) has a receptacle (3b) for the screw (3a), wherein the connecting portions (1, 2) are each parts of the roof, the end wall, the portal or the side wall of a vehicle body or are connected to one of these parts so that they can produce a connection between two of these parts, wherein the receptacle (3b) for the screw (3a) is a rivet nut acting as a guide,
**characterised in that**
the screw (3a) has a centring tip (3f).

2. Connector according to claim 1,
**characterised in that**
the two connecting portions (1, 2) are designed for a positively locking abutment.

3. Connector according to one of the preceding claims,
**characterised in that**
the screw (3a) is a pan head screw.

4. Connector according to one of the preceding claims,
**characterised in that**
a plurality of rivet nuts (3b) are provided in one connecting portion (2) and arranged so that they overlap with holes (1b), provided in the other connecting portion (1), for passage of the screws (3a) when the connecting portions are joined.

5. Connector according to one of the preceding claims,
**characterised in that**
the receptacle (3b) and / or the screw (3a) has / have a screw securing means.

6. Connector according to claim 5,
**characterised in that**
a micro-encapsulation or a liquid adhesive is provided as a screw securing means.

## Revendications

1. Liaison, en particulier pour des pièces de construction de véhicules automobiles, laquelle comprend une première section de liaison (1) et une deuxième section de liaison (2), ainsi qu'un dispositif de liaison (3) pour relier la première section de liaison (1) à la deuxième section de liaison (2), le dispositif de liaison présentant une vis (3a), qui passe à travers la première section de liaison et la deuxième section de liaison, sachant qu'une section de liaison (2) présente un réceptacle (3b) pour la vis (3a), sachant que les sections de liaison (1, 2) sont respectivement des pièces du toit, de la paroi frontale, de la porte ou de la paroi latérale d'un véhicule automobile ou sont reliées à l'une de ces pièces, de manière à ce qu'elles puissent réaliser une liaison entre deux de ces pièces, sachant que le réceptacle (3b) de la vis (3a) est un écrou à river qui agit en tant que guidage,
**caractérisée en ce que**
la vis (3a) est dotée d'une pointe de centrage (3f).

2. Liaison selon la revendication 1,
**caractérisée en ce que**
les deux sections de liaison (1, 2) sont conçues pour un engagement géométrique.

3. Liaison selon l'une des revendications précédentes,
**caractérisée en ce que**
la vis (3a) consiste en une vis à tête à flasque.

4. Liaison selon l'une des revendications précédentes,
**caractérisée en ce que**,
dans la section de liaison (2), est prévue une pluralité d'écrous à river (3b), qui sont disposés de manière à ce que, lors de l'assemblage des sections de liaison, ils soient superposés aux alésages (1b) prévus dans l'autre section de liaison pour l'insertion des vis (3a).

5. Liaison selon l'une des revendications précédentes,
**caractérisée en ce que**
le réceptacle (3b) et / ou la vis (3a) présente/nt un moyen de sécurisation de vis.

6. Liaison selon la revendication 5,
**caractérisée en ce que**,
comme moyen de sécurisation de vis, une microcapsulation ou une colle liquide est prévue.
